# EUROPÄISCHE PATENTSCHRIFT

(11) **EP 3 662 570 B1**
(45) Veröffentlichungstag und Bekanntmachung des Hinweises auf die Patenterteilung: **26.10.2022**
(21) Anmeldenummer: 18765049.4
(22) Anmeldetag: 24.08.2018
(51) Int. Cl.: H05B 45/345, H05B 45/3725, H02M 3/156

(54) **SCHALTWANDLER MIT STROMREGELUNG UND VERFAHREN**
SWITCH-MODE CONVERTER WITH CURRENT CONTROL, AND METHOD
CONVERTISSEUR À DÉCOUPAGE À RÉGULATION DE COURANT ET PROCÉDÉ

(30) Priorität: 06.09.2017 DE 102017215679
(43) Veröffentlichungstag der Anmeldung: 10.06.2020
(73) Patentinhaber: Tridonic GmbH & Co. KG, 6851 Dornbirn (AT)
(72) Erfinder: DE CLERCQ, Ludwig Erasmus, 6850 Dornbirn (AT)
(74) Vertreter: Rupp, Christian
(86) Internationale Anmeldenummer: PCT/EP2018/072861
(87) Internationale Veröffentlichungsnummer: WO 2019/048259

(56) Entgegenhaltungen:
- EP-A1- 2 741 578
- EP-A1- 2 741 578
- WO-A1-2009/138908
- WO-A1-2009/138908
- DE-A1- 3 836 128
- DE-A1-102010 038 828
- DE-A1-102012 223 452
- DE-A1-102012 223 452

## Beschreibung

### TECHNISCHES GEBIET

Die Erfindung betrifft im Allgemeinen ein Betriebsgerät für eine Last mit einem DC-DC-Schaltwandler, welcher mindestens einen Schalter aufweist. Die Erfindung betrifft insbesondere Aspekte in Bezug auf eine Regelgröße einer Regelschleife, die den mindestens eine Schalter als Stellgröße schaltet.

### HINTERGRUND

Zur Helligkeitssteuerung von Leuchtmitteln kann es vorgesehen sein, den zeitgemittelten bzw. mittleren Stromfluss zu einem Leuchtmittel, beispielsweise eine Leuchtdiode sowie eine entsprechende Spannung, zu steuern. Dazu können Schaltwandler verwendet werden. Beispiele für Schaltwandler umfassen Abwärtswandler (engl. buck converter) und Sperrwandler (engl. flyback converter). Bei solchen Schaltwandlern ist ein Schalter vorgesehen, der das Laden und Entladen eines Energiespeichers, z.B. einer Spule, steuert. Beispielsweise ist es aus DE 10 2015 203 249 A1 bekannt, mittels des Schaltwandlers und einer Steuerung einen Regelkreis zu implementieren, der eine Dimmer-Funktionalität implementiert. Dabei kann der mittlere Stromfluss zum Leuchtmittel in Abhängigkeit von einer Führungsgröße geregelt werden, welche wiederum basierend auf einem Dimmer-Level bestimmt ist.

EP 2 741 578 A1, DE 10 2012 223452 A1 und WO 2009/138908 A1 offenbaren jeweils ein Betriebsgerät für ein Leuchtmittel mit den Merkmalen des Oberbegriffs des unabhängigen Anspruchs 1.

### KURZE ZUSAMMENFASSUNG DER ERFINDUNG

Es besteht ein Bedarf für verbesserte Techniken zum Regeln des Stromflusses Diese Aufgabe wird von den Merkmalen der unabhängigen Patentansprüche gelöst. Die Merkmale der abhängigen Patentansprüche definieren Ausführungsformen.

### KURZE BESCHREIBUNG DER FIGUREN

FIG. 1 illustriert schematisch ein Betriebsgerät mit einer Steuerung und einem Schaltwandler.
FIG. 2 illustriert schematisch einen Sperrwandler eines Betriebsgeräts gemäß verschiedener Beispiele.
FIG. 3 illustriert schematisch einen Abwärtswandler eines Betriebsgeräts gemäß verschiedener Beispiele.
FIG. 4 illustriert schematisch den zeitlichen Verlauf des Stromflusses durch den Sperrwandler aus FIG. 2.
FIG. 5 illustriert schematisch den zeitlichen Verlauf des Stromflusses durch den Sperrwandler aus FIG. 2.
FIG. 6 illustriert schematisch den zeitlichen Verlauf des Stromflusses durch den Sperrwandler aus FIG. 2.
FIG. 7 illustriert schematisch eine Regelschleife, die eingerichtet ist, um den Betrieb eines Schaltwandlers zu regeln.
FIG. 8 illustriert schematisch einen Signalfluss in Bezug auf die Regelschleife aus FIG. 7.
FIG. 9 ist ein Flussdiagramm eines Verfahrens.

### DETAILLIERTE BESCHREIBUNG VON AUSFÜHRUNGSFORMEN

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden.

Nachfolgend wird die vorliegende Erfindung anhand bevorzugter Ausführungsformen unter Bezugnahme auf die Zeichnungen näher erläutert. In den Figuren bezeichnen gleiche Bezugszeichen gleiche oder ähnliche Elemente. Die Figuren sind schematische Repräsentationen verschiedener Ausführungsformen der Erfindung. In den Figuren dargestellte Elemente sind nicht notwendigerweise maßstabsgetreu dargestellt. Vielmehr sind die verschiedenen in den Figuren dargestellten Elemente derart wiedergegeben, dass ihre Funktion und genereller Zweck dem Fachmann verständlich wird. In den Figuren dargestellte Verbindungen und Kopplungen zwischen funktionellen Einheiten und Elementen können auch als indirekte Verbindung oder Kopplung implementiert werden. Eine Verbindung oder Kopplung kann drahtgebunden oder drahtlos implementiert sein. Funktionale Einheiten können als Hardware, Software oder eine Kombination aus Hardware und Software implementiert werden. Nachfolgend werden Techniken beschrieben, um mittels eines Betriebsgeräts eine elektrische Last zu betreiben. Die hierin beschriebenen Techniken können in Betriebsgeräten für Leuchtmittel Anwendung finden; in solchen Fällen bildet das Leuchtmittel - beispielsweise eine Leuchtdiode - die Last. Während nachfolgend vornehmlich auf eine solche Anwendung in Betriebsgeräten für Leuchtmittel Bezug genommen wird, können die hierin beschriebenen Techniken jedoch auch im Betrieb für andere Arten von Lasten angewendet werden.

In den hierin beschriebenen Beispielen werden DC-DC-Schaltwandler (nachfolgend kurz Schaltwandler) verwendet, um die Leuchtdiode zu betreiben. Solche Schaltwandler weisen einen oder mehrere Schalter - z.B. durch Halbleiter-Transistoren implementiert - auf, sowie einen Energiespeicher. Beispiele für Schaltwandler umfassen Wandler mit und ohne Potentialtrennung. Beispiele umfassen Abwärtswandler, Sperrwandler, Aufwärts-Abwärtswandler und Aufwärtswandler. Typischerweise wird der mindestens eine Schalter des Schaltwandlers zyklisch zwischen einem leitenden und einem nicht-leitenden Zustand hin- und her geschaltet. Durch einen Tastgrad des zyklischen Hin- und Herschaltens können die Spannung und der Stromfluss zur Last gesteuert werden.

Dabei ist der Betrieb des mindestens einen Schalters gesteuert, beispielsweise als Stellgröße einer Regelschleife. Dies bedeutet, dass der mindestens eine Schalter gezielt zwischen einem leitenden Zustand (oder AN-Zustand oder geschlossener Zustand) und einem nicht-leitenden Zustand (oder AUS-Zustand oder geöffneter Zustand) hin- und her geschaltet werden kann. Dadurch kann insbesondere der mittlere Stromfluss zur Leuchtdiode gesteuert werden.

Die hierin beschriebenen Techniken ermöglichen es, den mittleren Stromfluss zur Last besonders genau zu steuern. Insbesondere ist durch den Schaltwandler und eine Steuerung des Betriebsgeräts eine Regelschleife implementiert, die eine für den mittleren Stromfluss zur Last indikative Größe als Regelgröße berücksichtigt. Dies bedeutet, dass der mittlere Stromfluss zur Last durch die Regelschleife genau und überwacht eingestellt werden kann, z.B. in Bezug zu einer Führungsgröße. Zeitliche Drifts - z.B. aufgrund von Temperatur-Schwankungen oder Alterung der Leuchtdiode - können im Rahmen von Störgrößen berücksichtigt werden.

Die Helligkeit von Leuchtdioden ist abhängig vom mittleren Stromfluss, mit welchem die Leuchtdioden betrieben werden. Indem der mittlere Stromfluss zur Last mittels der Regelschleife gesteuert wird, ermöglichen es die hierin beschriebenen Techniken, die Helligkeit von Leuchtdioden genau und überwacht einzustellen. Damit kann beispielsweise Dimmer-Funktionalität implementiert werden.

Verschiedene Beispiele beruhen auf der Erkenntnis, dass die Auswahl der geeigneten Regelgröße die Komplexität und Genauigkeit, mit welcher der Stromfluss zur Last durch die Regelschleife eingestellt werden kann, beeinflusst. In den verschiedenen hierin beschriebenen Beispielen wird eine Regelgröße verwendet, die indikativ für den mittleren Stromfluss zur Last ist, jedoch besonders einfach und genau zu bestimmen ist.

In den verschiedenen hierin beschriebenen Beispielen wird die Regelgröße der Regelschleife basierend auf einer Kombination eines minimalen Stromflusses durch den Schaltwandler und eines maximalen Stromflusses durch den Schaltwandler bestimmt. Dies bedeutet, dass - beispielsweise anstatt direkt und getrennt den maximalen und minimalen Stromfluss als Regelgrößen zu berücksichtigen, eine daraus abgeleitete Kombination berücksichtigt wird.

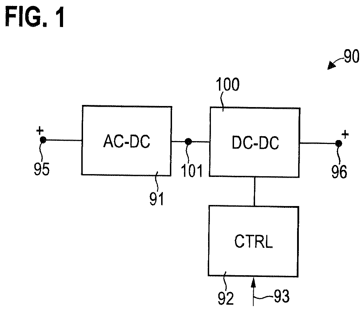

FIG. 1 illustriert Aspekte in Bezug auf ein Betriebsgerät 90, welches von hierin beschriebenen Techniken profitieren kann. Das Betriebsgerät 90 umfasst einen Netzanschluss 95. Das Betriebsgerät 90 ist eingerichtet, um eine Netzspannung über den Netzanschluss 95 zu empfangen. Die Netzspannung kann eine AC-Spannung mit einer Amplitude im Bereich von 100 V bis 300 V sein.

Das Betriebsgerät 90 umfasst auch einen AC-DC-Wandler 91. Der AC-DC-Wandler 91 ist eingerichtet, um die Netzspannung in ein DC-Signal wandeln. Beispielsweise könnte der AC-DC-Wandler einen Brückengleichrichter, ein oder mehrere Glättungsfilter, etc. aufweisen.

Während in FIG. 1 das Betriebsgerät eine AC-Spannung empfängt, könnte das Betriebsgerät in anderen Implementierungen auch eine DC-Spannung empfangen, z.B. von einem DC Bus-System (engl. DC string).

Das Betriebsgerät 90 umfasst auch einen Schaltwandler 100, der eingerichtet ist, um über einen Eingangsanschluss 101 das DC-Signal vom AC-DC-Wandler 91 zu empfangen. Das DC-Signal weist eine bestimmte Spannungsamplitude auf. Der Schaltwandler 100 ist eingerichtet, um ein weiteres DC-Signal über einen Ausgangsanschluss 96 an eine Leuchtdiode (in FIG. 1 nicht dargestellt) auszugeben, wobei das weitere DC-Signal eine Spannungsamplitude aufweist, die verschieden ist von der Spannungsamplitude des DC-Signals am Eingang 101 des Schaltwandlers 100. Der Schaltwandler beeinflusst auch den Stromfluss zur Leuchtdiode. Außerdem umfasst das Betriebsgerät 90 auch eine Steuerung 92. Die Steuerung 92 könnte beispielsweise durch einen Mikrocontroller oder ein programmierbares Schalter-Array (engl. field-programmable array, FPGA) implementiert werden. Die Steuerung 92 kann als Hardware und/oder Software implementiert werden.

Die Steuerung 92 implementiert Dimmer-Funktionalität. Dies bedeutet, dass die Steuerung 92 basierend auf einem Dimmer-Signal 93 den Betrieb des Schaltwandlers 100 geregelt steuert. Das Dimmer-Signal 93 indiziert einen Helligkeits-Wunsch eines Benutzers.

Insbesondere implementiert die Steuerung 92 zusammen mit dem Schaltwandler 100 eine Regelschleife. Dabei wird mindestens ein Schalter des Schaltwandlers 100 als Stellgröße der Regelschleife geschaltet, d.h. wahlweise im leitenden oder nicht-leitenden Zustand betrieben. Dadurch kann insbesondere der mittlere Stromfluss zur Last 96 geregelt werden, wo durch die Helligkeit eines die Last implementierenden Leuchtmittel geregelt werden kann. Die Führungsgröße wird basierend auf dem Dimmer-Signal 93 bestimmt.

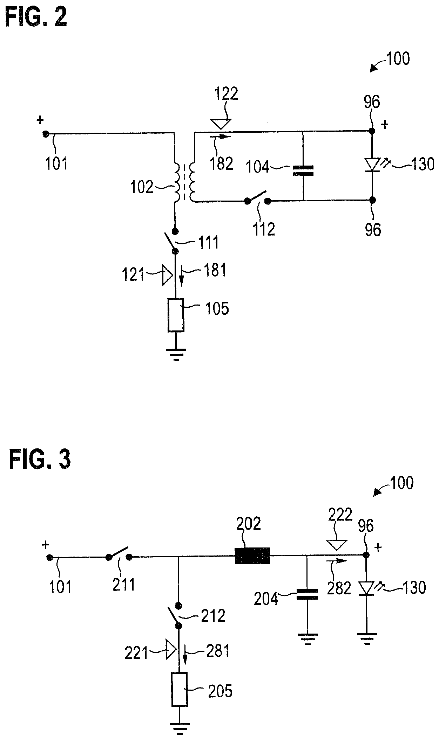

FIG. 2 illustriert Aspekte in Bezug auf den Schaltwandler 100. FIG. 2 illustriert eine beispielhafte Implementierung des Schaltwandlers 100. In dem Beispiel der FIG. 2 ist der Schaltwandler 100 als Sperrwandler mit Potentialtrennung implementiert.

Der Sperrwandler 100 umfasst ein Paar Spulen 102, die einen Transformator implementieren. Dies bedeutet, dass die Spulen 102 induktiv gekoppelt sind. Die Spulen 102 wirken als Energiespeicher.

Der Sperrwandler 100 umfasst auch einen Schalter 111, der auf der Primärseite der Spulen 102 hin zu Masse angeordnet ist, sowie einen Widerstand 105. Ferner umfasst der Sperrwandler 100 einen Schalter 112, der auf der Sekundärseite der Spulen 102 angeordnet ist. Der Sperrwandler 100 umfasst auch einen Kondensator 104, der Glättungsfunktionalität bereitstellt. In manchen Beispielen könnte anstatt des Schalters 112 auch eine Diode verwendet werden.

Im Beispiel der FIG. 2 ist auch eine Leuchtdiode 130 dargestellt, die mit dem Ausgangsanschluss 96 des Sperrwandlers 100 verbunden ist, und welche die Last implementiert.

In FIG. 2 ist ferner dargestellt, wie der Stromfluss 181 auf der Primärseite der Spulen 102 durch eine Messschaltung 121 gemessen werden kann. Außerdem ist in FIG. 2 dargestellt, wie der Stromfluss 182 auf der Sekundärseite der Spulen 102 durch eine weitere Messschaltung 122 gemessen werden kann. Die Messschaltungen 121, 122 könnten beispielsweise einen Shunt-Widerstand umfassen. Es wäre möglich, eine induktive Kopplung zu verwenden.

Nachfolgend wird die Funktionsweise des Sperrwandlers 100 beschrieben. Phase (i): Zunächst wird der Schalter 111 im leitenden Zustand betrieben. Dann steigt der Stromfluss durch die Primärspule 102 und Energie wird in den Spulen 102 gespeichert. Dies bedeutet, dass der Schalter 111 den Ladevorgang des durch die Spulen 102 implementierten Energiespeichers steuert. Gleichzeitig ist der Schalter 112 nicht-leitend geschaltet: deshalb fließt kein Stromfluss durch die Sekundärspule 102. Der Stromfluss zur Last 130 wird vom Glättungskondensator 104 gespeist. Phase (ii): Dann wird der Schalter 111 nicht-leitend geschaltet und der Schalter 112 wird leitend geschaltet. Diese Phase wird oftmals als Sperr-Phase bezeichnet. Die zuvor in den Spulen 102 gespeicherte Energie speist den Stromfluss zur Last 130 und lädt außerdem den Kondensator 104. Die Phasen (i) und (ii) werden zyklisch wiederholt, indem die Schalter 111, 121 geeignet zwischen dem leitenden und dem nicht-leitenden Zustand hin- und her geschaltet werden.

Aus der voranstehenden Beschreibung ist ersichtlich, dass durch gezieltes Schalten der Schalter 111, 112 der Stromfluss zur Last 130 gesteuert werden kann. Dabei sind grundsätzlich unterschiedliche Betriebsmodi in Bezug auf das Schalten der Schalter 111, 112 bekannt. Beispielsweise können die Schalter 111, 112 im sogenannten kontinuierlichen Modus (engl. continuous mode) betrieben werden. Dabei wird der Schalter 111 in den leitenden Zustand geschaltet, bevor der Stromfluss 182 auf null abgesunken ist. Es wäre auch möglich, die Schalter 111, 112 im sogenannten lückenden Modus (engl. discontinuous mode) zu betreiben. Dabei wird der Schalter 111 erst dann wieder in den leitenden Zustand geschaltet, wenn der Stromfluss 182 bereits für eine bestimmte Zeit auf null - oder darüber hinaus auf negative Werte - abgesunken ist. Durch geeignetes Schalten des Schalter 112 kann der Stromfluss 182 auf null absinken und optional auch negative Werte annehmen. Der sogenannte Grenzbetrieb-Modus (engl. borderline mode) stellt den Übergang von dem kontinuierlichen Modus zum diskontinuierlichen Modus dar; d.h., der Schalter 111 wird gerade dann in den leitenden Zustand geschaltet, wenn der Stromfluss 182 auf null abgesunken ist. Die hierein beschriebenen Techniken können auf alle solche Betriebsmodi angewendet werden.

FIG. 3 illustriert Aspekte in Bezug auf den Schaltwandler 100. FIG. 3 illustriert eine beispielhafte Implementierung des Schaltwandlers 100. In dem Beispiel der FIG. 3 ist der Schaltwandler 100 als Abwärtswandler implementiert.

Der Abwärtswandler 100 umfasst eine Spule 202. Die Spule 202 wirkt als Energiespeicher.

Der Abwärtswandler 100 umfasst auch einen Schalter 211, der angrenzend an den Eingangsanschluss 101 angeordnet ist (manchmal auch als high-side Schalter bezeichnet). Der Abwärtswandler 100 umfasst ferner einen weiteren Schalter 212 (manchmal auch als low-side Schalter bezeichnet) der hin zu Masse angeordnet ist, sowie einen Masse-seitigen Widerstand 205. Anstatt des Schalters 212 wird manchmal auch eine Diode verwendet. Ein Glättungskondensator 204 ist vorgesehen.

In FIG. 3 ist auch dargestellt, wie der Stromfluss 281 durch eine Messschaltung 221 gemessen werden kann; sowie wie der Stromfluss 282 durch eine Messschaltung 222 gemessen werden kann.

Im Grundsatz entspricht der Betrieb des Abwärtswandlers 100 gemäß dem Beispiel der FIG. 3 dem Betrieb des Sperrwandlers 100 gemäß dem Beispiel der FIG. 2. Wenn der Schalter 211 leitend geschaltet ist, wird der Energiespeicher 202 geladen. Wenn der Schalter 211 nicht-leitend geschaltet ist, wird der Energiespeicher 202 entladen. Insbesondere ist es auch möglich, den Abwärtswandler 100 im kontinuierlichen Modus, im lückenden Modus oder im Grenzbetrieb-Modus zu betreiben.

Nachfolgend wird aus Gründen der Einfachheit primär auf eine Implementierung des Schaltwandlers als Sperrwandler Bezug genommen; die entsprechenden Techniken könnten aber auch unmittelbar auf andere Typen von Schaltwandlern übertragen werden, z.B. auch den Abwärtswandler 100 gemäß dem Beispiel der FIG. 3.

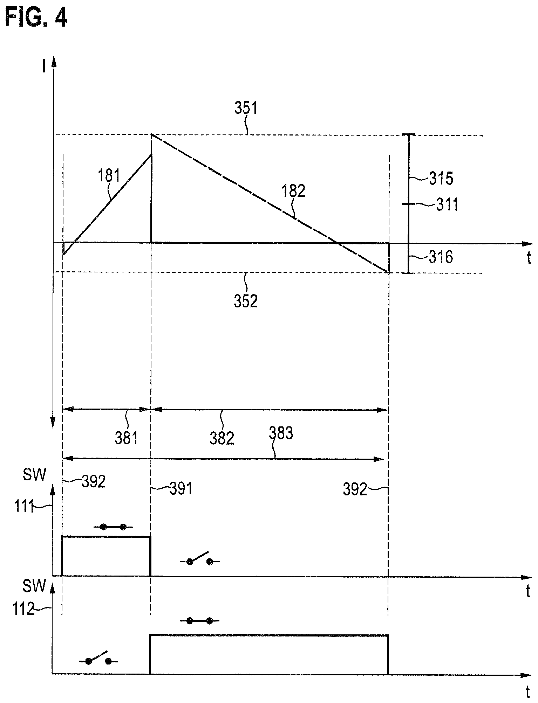

FIG. 4 illustriert Aspekte in Bezug auf den Sperrwandler 100 aus FIG. 2. Insbesondere illustriert FIG. 4 Aspekte in Bezug auf den Verlauf der Ströme 181, 182 als Funktion der Zeit (in FIG. 4 oben dargestellt), sowie den Betrieb der Schalter 111, 112 (in FIG. 4 unten dargestellt).

Während einer Zeitdauer 381 wird der Schalter 111 im leitenden Zustand betrieben. Hier wird Energie in den Spulen 102 gespeichert. Gleichzeitig nimmt der Stromfluss 181 als Funktion der Zeit zu. Die Rate der Zunahme des Stromflusses 181 ist abhängig von der Induktivität der Spulen 102. Die Spannung über die Sekundärspule 102 nimmt einen negativen Wert an (in FIG. 4 nicht dargestellt). Weil der Schalter 112 nicht-leitend geschaltet ist, ist der Stromfluss 182 gleich null.

Dann wird an einem Zeitpunkt 391 von der Phase (i) zur Phase (ii) umgeschaltet. Anschließend wird während einer Zeitdauer 382 der Schalter 111 nicht-leitend geschaltet und der Schalter 112 wird leitend geschaltet. Dabei dreht sich die Polung der Spannung an den Spulen 102 um und die Spannung über die Sekundärspule 102 nimmt einen positiven Wert an (in FIG. 4 nicht dargestellt). Deshalb fließt der Stromfluss 182, wie in FIG. 2 eingezeichnet, zunächst zur Last. Der Stromfluss 182 nimmt als Funktion der Zeit ab, wobei die Rate der Abnahme des Stromflusses 182 wiederum abhängig von der Induktivität der Spule 102 ist. Der Stromfluss 182 nimmt im dargestellten Beispiel gegen Ende der Phase (ii) auch negative Werte an. Dies wäre nicht möglich, wenn anstatt des Schalters 112 eine Diode verwendet werden würde.

Die Spannung am Ausgangsanschluss 96 lässt sich durch das Übersetzungsverhältnisse des durch die Spulen 102 implementierten Transformators bestimmen. Die Spannung am Ausgangsanschluss 96 ist auch abhängig vom Tastgrad, d.h. dem Verhältnis der Zeitdauer 381 zur gesamten Zyklusdauer 383. Der Stromfluss zur Last 130 entspricht dem zeitlichen Mittelwert des Stromflusses 182. Deshalb kann der Stromfluss zur Last 130 durch gezieltes Schalten der Schalter 111, 112 gesteuert werden.

Referenzimplementierungen verwenden dabei eine Regelschleife, die den maximalen Stromfluss 351, sowie den minimalen Stromfluss 352 jeweils als eigene Regelgröße berücksichtigt. In verschiedenen hierin beschriebenen Beispielen wird anstatt mehreren getrennten Regelgrößen eine gemeinsame Regelgröße verwendet, die in manchen Beispielen basierend auf einer Kombination des maximalen Stromflusses 351 und des minimalen Stromflusses 352 bestimmt wird.

Beispielsweise kann die Steuerung eingerichtet sein, um von der Messschaltung 121 ein erstes Messsignal zu erhalten, welches indikativ für den Stromfluss 181 ist, und um von der Messschaltung 122 ein zweites Messsignal zu erhalten, welches indikativ für den Stromfluss 182 ist. Dann kann die Steuerung 92 eingerichtet sein, um das erste Messsignal und das zweite Messsignal bzw. Werte, die dem maximalen Stromfluss 351 und dem minimalen Stromfluss 352 entsprechen, zu kombinieren. Basierend auf dem derart kombinierten Signal kann dann die Regelung erfolgen, d.h. das kombinierte

Signal entspricht der Regelgröße. Dabei kann auch das Wicklungsverhältnis des durch die Spulen 102 implementierten Transformators berücksichtigt werden, um beispielsweise vom Messsignal der Messschaltung 121 auf den maximalen Stromfluss 351 auf der Sekundärseite zurückzuschließen. In manchen Beispielen könnte zur Bestimmung der Regelgröße auch nur das Messsignal der Messschaltung 122 berücksichtigt werden, jeweils zum Zeitpunkt 391 und 392.

Dabei kann die Kombination vorgegeben sein. Dies bedeutet in anderen Worten, dass durch das Verwenden einer vorgegebenen Kombination auch das Verhältnis, mit welchem der maximale Stromfluss 351 und der minimale Stromfluss 352 in der Regelgröße berücksichtigt werden, vorgegeben sein kann. Dabei sind in den verschiedenen hierin beschriebenen Beispielen unterschiedliche Kombinationen des maximalen Stromflusses 351 mit dem minimalen Stromfluss 352 möglich. In einer Implementierung kann die Kombination einem Mittelwert 311 des maximalen Stromflusses 351 und des minimalen Stromflusses 352 entsprechen.

In FIG. 4 sind auch der Offset 315 des maximalen Stromflusses 351 von dem Mittelwert 311 und der Offset 316 des minimalen Stromflusses 352 von dem Mittelwert 311 dargestellt. Im Falle einer Mittelwertbildung als Kombination ist der Offset 315 genauso groß wie der Offset 316. Es ist möglich, mittels des Offsets 315 und mittels des Offsets 316 die Schaltzeitpunkte 391, 392 für die Schalter 111, 112 zu bestimmen. Dazu können z.B. geeignete Komparatoren im Zusammenhang mit den Messschaltkreisen 121, 122 verwendet werden. Außerdem kann dabei das Wicklungsverhältnis des durch die Spulen 102 implementierten Transformators berücksichtigt werden, um vom Messsignal der Messschaltung 121, d.h. um vom Stromfluss 181, auf das Erreichen des Offsets 315 - der in Bezug auf den Stromfluss 182 definiert sein kann - zurückzuschließen und den Schalter 111 zum Zeitpunkt 391 entsprechend zu schalten. Der Schaltzeitpunkt 392 ist in Bezug auf den Schalter 112 definiert und wird durch den Offset 316 bestimmt.

Durch das Verwenden einer Regelgröße, die basierend auf der Kombination des maximalen Stromflusses 351 und des minimalen Stromflusses 352 bestimmt wird, ist eine besonders einfache Implementierung der Regelschleife möglich. Insbesondere ist es derart möglich, den Betrieb der beiden Schalter 111, 112 basierend auf einer einzigen Regelgröße zu steuern. Außerdem kann durch das Verwenden dieser Regelgröße, die auf der Kombination des maximalen Stromflusses 351 und des minimalen Stromflusses 352 bestimmt wird, die Schaltfrequenz dynamisch verändert werden, ohne dass der Betrieb des Schaltwandlers 100 bzw. des Leuchtmittel 130 beeinträchtigt werden würde. Dies wird im Zusammenhang mit den nachfolgenden FIGs. näher erläutert.

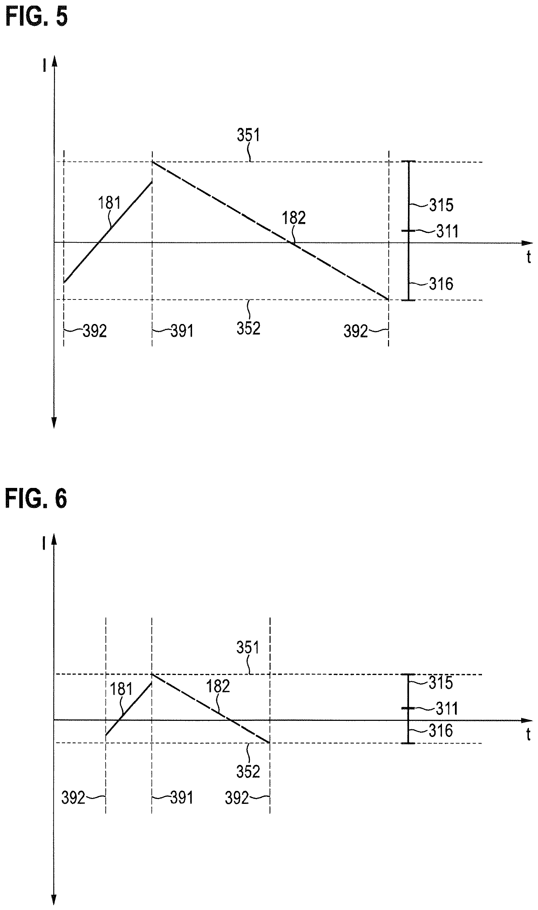

FIG. 5 illustriert Aspekte in Bezug auf den Sperrwandler 100 aus FIG. 2. Insbesondere illustriert FIG. 5 Aspekte in Bezug auf den Verlauf der Ströme 181, 182 als Funktion der Zeit.

Dabei entspricht das Beispiel der FIG. 5 grundsätzlich dem Beispiel der FIG. 4. In dem Beispiel der FIG. 5 wird durch die Regelschleife - z.B. aufgrund einer veränderten Führungsgröße, die z.B. aus einem veränderten Dimmer-Level resultieren kann - auf einen geringeren Mittelwert 311 geregelt. Dadurch resultiert ein geringerer mittlerer Stromfluss zum Leuchtmittel 130, wodurch wiederum ein geringerer Helligkeitswert resultiert. Dies wird erreicht, indem die Schaltzeitpunkte 391, 392 gegenüber dem Beispiel der FIG. 4 verändert werden. Die Stellgröße der Regelschleife wird also so angepasst, dass der geringere mittlere Stromfluss erreicht wird.

Aus einem Vergleich der FIGs. 4 und 5 ist auch ersichtlich, dass der Offset 315 vom Mittelwert 311 zum maximalen Stromfluss 351, sowie der Offset 316 vom Mittelwert 311 zum minimalen Stromfluss 352 in den beiden Implementierungen gleich ist. Insbesondere können der Offset 315 und der Offset 316 fest vorgegeben sein und nicht durch die Regelschleife verändert werden, d.h. insbesondere nicht als Stellgröße variiert werden. Dies bedeutet also, dass der Offset 315 und der Offset 316 nicht durch die Regelschleife dynamisch angepasst werden. Vielmehr könnten der Offset 315 und der Offset 316 parametrisiert vorgegeben sein. Beispielsweise könnte der Offset 315 und der Offset 316 in Abhängigkeit vom mittleren Stromfluss zur Last 130, das heißt in Abhängigkeit von einer basierend auf einem Dimmer-Level bestimmten Führungsgröße, bestimmt sein. Dies ist im Zusammenhang mit FIG. 6 dargestellt.

FIG. 6 illustriert Aspekte in Bezug auf den Sperrwandler 100 aus FIG. 2. Insbesondere illustriert FIG. 6 Aspekte in Bezug auf den Verlauf der Ströme 181, 182 als Funktion der Zeit.

Dabei entspricht das Beispiel der FIG. 6 grundsätzlich dem Beispiel der FIG. 5. Insbesondere ist der Mittelwert 311 in den Beispielen der FIGs. 5 und 6 gleich. Jedoch wird in dem Beispiel der FIG. 6 ein kleiner Offset 315 und ein kleiner Offset 316 verwendet; dies bedeutet, dass die Beträge des maximalen und minimalen Stromflusses 351, 352 abnehmen. Dies hat den Vorteil, dass der Energietransfer über den durch die Spulen 102 implementierten Transformator reduziert wird, wodurch auch dissipativer Energieverlust in Wärme reduziert wird.

Eine Nachschlage-Tabelle ist vorhanden, welche die Offsets 315, 316 in Abhängigkeit von der Führungsgröße der Regelschleife 500 bestimmt. Dabei kann im Allgemeinen eine Tendenz existieren, die kleinere (größere) Offsets 315, 316 für kleinere (größere) Führungsgrößen, d.h. Helligkeitswerte der Leuchtdiode 130, verwendet.

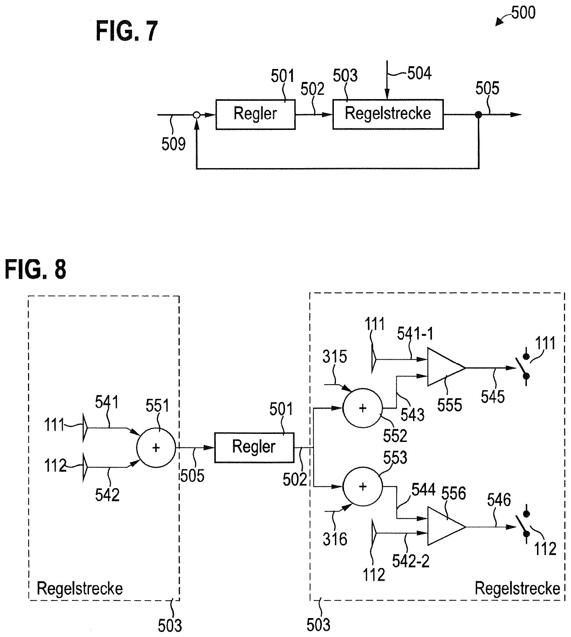

FIG. 7 illustriert Aspekte in Bezug auf eine Regelschleife 500, die in den verschiedenen hierin beschriebenen Beispielen dazu verwendet werden kann, um den Betrieb eines Schaltwandlers 100 zu steuern. Die Regelschleife 500 kann in Hardware und/oder Software implementiert sein. Die Regelschleife 500 kann durch die Steuerung 92 und den Schaltwandler 100 implementiert sein.

Die Regelschleife 500 steuert mittels einer Stellgröße 502 den Betrieb des Schaltwandlers 100. Eine Regelstrecke 503 der Regelschleife 500 wird also durch den Schaltwandler 100 und insbesondere ein oder mehrere Schalter 111, 112, 211, 212 implementiert. Die Stellgröße 502 kann zum Beispiel durch ein Steuersignal implementiert werden, welches an die Schalter 111, 112, 211, 212 ausgegeben wird und welches Betrieb der Schalter 111, 112, 211, 212 im leitenden oder nicht-leitenden Zustand bestimmt. Ein entsprechender Gate-Treiber könnte für Schalter 111, 112, 211, 212, die als Feldeffekttransistoren implementiert sind, vorgesehen sein. In anderen Worten kann also über die Stellgröße der Übergang von der Zeitdauer 381 zu Zeitdauer 382 (vergleiche FIG. 4) und wiederum von der Zeitdauer 382 zu Zeitdauer 381 bestimmt werden. Dabei können die Offsets 315, 316 berücksichtigt werden.

Die Regelstrecke 503 wird auch durch ein oder mehrere Sensoren zur Überwachung des Betriebs implementiert. Beispielsweise könnte die Regelstrecke auch die Messschaltungen 121, 122, 221, 222 umfassen. Dann könnte beispielsweise ein Signal der Messschaltung 121 bzw. 221 mit einem Signal der Messschaltung 122 bzw. 222 kombiniert werden, um eine Regelgröße 505 zu bestimmen.

Durch die Steuerung des Betriebs des Schaltwandlers 100 wird also die Regelgröße 505 beeinflusst. Die Regelgröße 505 wird in den verschiedenen hierin beschriebenen Beispielen basierend auf einer Kombination des maximalen Stromflusses 351 und des minimalen Stromflusses 352 bestimmt. Eine solche Regelgröße 505 korreliert insbesondere - z. B. unter Beeinflussung des Wicklungsverhältnisses und/oder der Induktivität der Spulen 102 - mit dem mittleren Stromfluss zur Last 130, welcher zum Beispiel im Fall einer Leuchtdiode die Helligkeit der Leuchtdiode beeinflusst. Dies bedeutet, dass durch Regeln auf eine bestimmte Regelgröße 505, die Helligkeit der Leuchtdiode gesteuert werden kann - auch wenn zeitveränderliche Störgrößen 504 auf die Regelstrecke 503 einwirken.

Die Regelgröße 505 wird verglichen mit einer Führungsgröße 509. Dies wird durch den Regler 501 erreicht. Der Regler 501 könnte beispielsweise eine Abweichung zwischen der Führungsgröße 509 und der Regelgröße 505 bestimmen und durch geeignete Variation der Stellgröße 502 diese Abweichung minimieren. Beispielsweise wäre es möglich, dass die Führungsgröße 509 in Abhängigkeit von dem mittleren Stromfluss zur Last 130 verändert wird; beispielsweise könnte der mittlere Stromfluss zur Last 130 in Abhängigkeit von einem gewünschten Dimmer-Niveau verändert werden.

FIG. 8 illustriert Details zum Signalfluss im Zusammenhang mit der Regelschleife 500. Zunächst wird in der Regelstrecke 503 die Regelgröße 505 bestimmt. Dies erfolgt in dem Beispiel der FIG. 8 basierend auf einem Messsignal 541, das von der Messschaltung 111 erhalten wird, und das indikativ für den maximalen Stromfluss 351 ist; sowie basierend auf einem Messsignal 542, das von der Messschaltung 112 erhalten wird, und das indikativ für den minimalen Stromfluss 352 ist. In anderen Beispielen wäre es auch möglich, dass die Messsignal 541, 542 beispielsweise beide von der Messschaltung 112 erhalten werden.

Die Messsignale 541, 542 können durch analoge und/oder digitale Nachverarbeitung der Rohsignale der Messschaltungen 111, 112 erhalten werden. Die Analyse der Rohsignale der Messschaltungen 111, 112 zum Auffinden des maximalen Stromflusses 351 und des minimalen Stromflusses 352 während eines Betriebszyklus kann z.B. durch Software-Funktionalität der Steuerung 92 implementiert sein.

Dann werden die Messsignale 541, 542 einem Kombinationselement 551 zugeführt. Das Kombinationselement 551 könnte als Analogelektronik und/oder Digitalelektronik ausgebildet sein. Beispielsweise könnte das Kombinationselement 551 durch eine entsprechende Software-Funktionalität der Steuerung 92 implementiert sein. Daraus wird die Regelgröße 505 erhalten. Beispielsweise könnte das Kombinationselement 551 eingerichtet sein, um die Regelgröße 505 als Mittelwert der Messsignale 541, 542 zu erhalten.

Die Regelgröße 505 wird dann in bekannter Weise dem Regler 501 zugeführt. Der Regler 501 bestimmt die Stellgröße 502. In dem Beispiel der FIG. 8 bestimmte Regler 501 also basierend auf einer einzigen Regelgröße 505 die Stellgröße 502. Dies kann die Implementierung des Regler 501 vereinfachen. Z.B. könnte ein PI-Regler 501 verwendet werden.

In dem Beispiel der FIG. 8 entspricht die Stellgröße 502 einem veränderten Mittelwert des maximalen Stromflusses 351 und des minimalen Stromflusses 352. Aus der Stellgröße 502 werden dann die Steuersignale 545 zum Ansteuern des Schalters 111 unter Steuersignal 546 zum Ansteuern des Schalters 112 abgeleitet.

Dies erfolgt zunächst durch Addieren des positiven Offsets 315 auf die Stellgröße 502 mittels des Kombinationselements 552. Außerdem wird der negative Offset 316 mittels des Kombinationselements 553 auf die Stellgröße 502 addiert. Aus FIG. 8 ist ersichtlich, dass die Offsets 315, 316 nicht im Rahmen der Stellgröße 502 verändert werden, sondern vielmehr vorgegeben sind. Zum Beispiel könnten die Offsets 315, 316 eine Abhängigkeit von der Führungsgröße 509 aufweisen (in FIG. 8 nicht dargestellt).

Die derart erhaltenen Signale 543, 544 werden dann Komparatoren 555, 556 zugeführt. Mittels der Komparatoren 555, 556 wird überwacht, ob die Stromflüsse 181, 182 bereits die durch die Offsets 315, 316, sowie den veränderten Mittelwert der Stellgröße 502 definierten Wert angenommen haben. Dazu werden entsprechende momentane Stromflüsse durch die Messsignale 541-1 und 541-2 von den Messschaltkreisen 111 bzw. 112 empfangen und auch dem Komparatoren 555, 556 zugeführt. Die Ausgabesignale 545, 546 werden dann zur Steuerung der Schalter 111, 112 verwendet. Daraus ist insbesondere ersichtlich, dass die Schaltzeitpunkte 391, 392 der Schalter 111, 112 jeweils durch die Offsets 315, 316 und den veränderten Mittelwert - der wiederum basierend auf dem gemessenen Mittelwert 311 bestimmt wird - bestimmt werden.

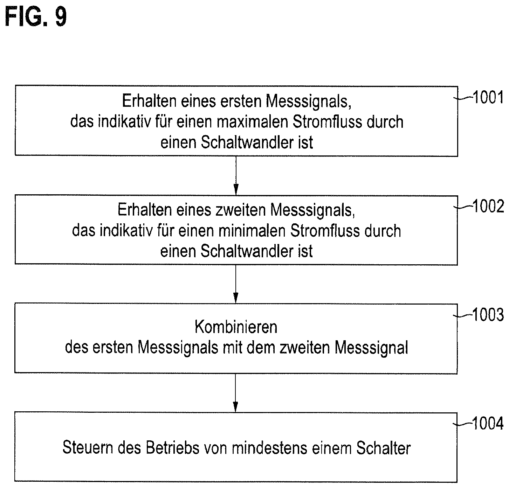

FIG. 9 ist ein Flussdiagramm eines beispielhaften Verfahrens. Zunächst wird in Block 1001 ein erstes Messsignal erhalten. Das erste Messsignal ist indikativ für einen maximalen Stromfluss durch einen Schaltwandler. Zum Beispiel kann das erste Messsignal indikativ für den maximalen Stromfluss während einem Zyklus des zyklischen Betriebs des Schaltwandlers sein. Typischerweise wird der maximale Stromfluss gegen Ende einer Phase des Aufladens eines Energiespeichers des Schaltwandlers erreicht.

Das erste Messsignal kann den maximalen Stromfluss analog oder digital codieren.

Dann wird in Block 1002 ein zweites Messsignal erhalten. Das zweite Messsignal ist indikativ für einen minimalen Stromfluss durch den Schaltwandler. Zum Beispiel kann das zweite Messsignal indikativ für den minimalen Stromfluss während einem Zyklus des zyklischen Betriebs der Schaltwandlers sein. Typischerweise wird der minimale Stromfluss am Anfang einer Phase des Aufladens des Energiespeichers des Schaltwandlers erreicht.

Dann wird in Block 1003 das erste Messsignal mit dem zweiten Messsignal kombiniert. Dies kann in der Analogdomäne oder der Digitaldomäne erfolgen. Beispielsweise könnte das kombinierte Signal einem Mittelwert des maximalen Stromflusses und des minimalen Stromflusses entsprechen.

Anschließend wird in Block 1004 der Betrieb von mindestens einem Schalter des Schaltwandlers basierend auf dem in Block 1003 kombinierten Signal gesteuert. Beispielsweise könnte das kombinierte Signal als Regelgröße einer entsprechenden Regelschleife mit einer Führungsgröße verglichen werden. Eine Regelabweichung zwischen der Regelgröße und der Führungsgröße könnte durch Verändern des Mittelwerts bzw. anderer Kombinationen des ersten und zweiten Messsignals mittels eines Regler reduziert werden.

Selbstverständlich können die Merkmale der vorab beschriebenen Ausführungsformen und Aspekte der Erfindung miteinander kombiniert werden. Insbesondere können die Merkmale nicht nur in den beschriebenen Kombinationen, sondern auch in anderen Kombinationen oder für sich genommen verwendet werden, ohne das Gebiet der Erfindung zu verlassen.

Beispielsweise wurden voranstehend verschiedene Techniken im Zusammenhang mit einem Sperrwandler beschrieben. Es wäre jedoch auch möglich, solche Techniken im Zusammenhang mit anderen Schaltwandler einzusetzen, beispielsweise mit Abwärtswandlern.

## Patentansprüche

1. Betriebsgerät (90) für ein Leuchtmittel (130), das umfasst:
- einen DC-DC-Schaltwandler (100) mit mindestens einem Schalter (111, 112, 211, 212) und einem Energiespeicher (102, 202), und
- eine Steuerung (92), die eingerichtet ist, um den mindestens einen Schalter (111, 112, 211, 212) als Stellgröße (502) einer Regelschleife (500) zu schalten,
wobei eine Regelgröße (505) der Regelschleife (500) basierend auf einer Kombination (311) eines minimalen Stromflusses (352) durch den DC-DC-Schaltwandler (100) und eines maximalen Stromflusses (351) durch den DC-DC-Schaltwandler (100) bestimmt ist,
wobei ein Regler (501) der Regelschleife (500) eine Abweichung zwischen einer Führungsgröße (509) und der Regelgröße (505) bestimmt und durch geeignete Variation der Stellgröße (502) diese Abweichung minimiert,
wobei ein erster Schaltzeitpunkt (391) des mindestens einen Schalters durch einen positiven Offset (315) gegenüber der Kombination (311) des minimalen Stromflusses (352) und des maximalen Stromflusses (351) bestimmt ist,
wobei ein zweiter Schaltzeitpunkt (391) des mindestens einen Schalters durch einen negativen Offset (316) gegenüber der Kombination (311) des minimalen Stromflusses (352) und des maximalen Stromflusses (351) bestimmt ist.
**dadurch gekennzeichnet, dass**
die Steuerung (92) eingerichtet ist, den Betrieb des Schaltwandlers (100) basierend auf einem Dimmer-Signal (93), das einen Helligkeits-Wunsch eines Benutzers indiziert, geregelt zu steuern,
die Führungsgröße (509) basierend auf dem Dimmer-Signal (93) bestimmt wird, sodass ein mittlerer Stromfluss zum Leuchtmittel (130) in Abhängigkeit von einem gewünschten Dimmer-Niveau verändert wird, und
ferner der positive Offset (315) und/oder der negative Offset (316) in Abhängigkeit von der Führungsgröße (509) der Regelschleife (500) verändert wird,
wobei die Offsets (315, 316) auf Basis einer Nachschlage-Tabelle in Abhängigkeit von der Führungsgröße der Regelschleife (500) bestimmt werden.

2. Betriebsgerät (90) nach Anspruch 1,
wobei die Regelgröße (505) basierend auf einem Mittelwert (311) des minimalen Stromflusses (352) und des maximalen Stromflusses (351) bestimmt ist.

3. Betriebsgerät (90) nach Anspruch 1 oder 2,
wobei der positive Offset (315) oder der negative Offset (316) nicht als Stellgröße (502) der Regelschleife (500) verändert wird.

4. Betriebsgerät (90) nach einem der voranstehenden Ansprüche,
wobei die Führungsgröße (509) der Regelschleife (500) in Abhängigkeit von einem vorgegebenen mittleren Stromfluss zum Leuchtmittel (130) verändert wird.

5. Betriebsgerät (90) nach einem der voranstehenden Ansprüche,
wobei der DC-DC-Schaltwandler (100) einen ersten Schalter (111, 121) aufweist, der den Ladevorgang des Energiespeichers (102, 202) steuert,
wobei der DC-DC-Schaltwandler (100) einen zweiten Schalter (112, 122) aufweist, der den Entladevorgang des Energiespeichers (102, 202) steuert,
wobei ein erster Schaltzeitpunkt (391) des ersten Schalters durch einen positiven Offset (315) gegenüber der Kombination (311) des minimalen Stromflusses (352) und des maximalen Stromflusses (351) bestimmt ist,
wobei ein zweiter Schaltzeitpunkt (392) des zweiten Schalters (112, 122) durch einen negativen Offset (316) gegenüber der Kombination (311) des minimalen Stromflusses (352) und des maximalen Stromflusses (351) bestimmt ist.

6. Betriebsgerät (90) nach einem der voranstehenden Ansprüche,
wobei der DC-DC-Schaltwandler (100) ein Sperrwandler mit einem Transformator ist,
wobei die Stellgröße in Abhängigkeit eines Wicklungsverhältnisses des Transformators bestimmt wird.

7. Betriebsgerät (90) nach einem der voranstehenden Ansprüche, das weiterhin umfasst:
- mindestens eine Messschaltung (121, 122, 221, 222), die eingerichtet ist, um den minimalen Stromfluss als Stromfluss durch den mindestens einen Schalter als ein erstes Messsignal zu messen und um den maximalen Stromfluss als Stromfluss durch den mindestens einen Schalter als ein zweites Messsignal zu messen,
- ein Kombinationselement, das mit der mindestens einen Messschaltung gekoppelt ist und das eingerichtet ist, um das erste Messsignal mit dem zweiten Messsignal zu kombinieren.

8. Verfahren, das umfasst:
- Erhalten eines ersten Messsignals, das indikativ für einen maximalen Stromfluss (351) durch einen Schaltwandler (100) ist,
- Erhalten eines zweiten Messsignals, das indikativ für einen minimalen Stromfluss (352) durch den Schaltwandler (100) ist,
- Kombinieren des ersten Messsignals mit dem zweiten Messsignal, und
- Steuern des Betriebs von mindestens einem Schalter (111, 112, 211, 212) des Schaltwandlers (100) als Stellgröße (502) einer Regelschleife (500) basierend auf dem kombinierten ersten und zweiten Messsignal als Regelgröße (505) der Regelschleife (500),
- Bestimmen einer Abweichung zwischen einer Führungsgröße (509) und der Regelgröße (505), und
- Minimieren dieser Abweichung durch geeignete Variation der Stellgröße (502),
- Bestimmen eines ersten Schaltzeitpunkts (391) des mindestens einen Schalters durch einen positiven Offset (315) gegenüber der Kombination (311) des minimalen Stromflusses (352) und des maximalen Stromflusses (351),
- Bestimmen eines zweiten Schaltzeitpunkts (391) des mindestens einen Schalters durch einen negativen Offset (316) gegenüber der Kombination (311) des minimalen Stromflusses (352) und des maximalen Stromflusses (351), **gekennzeichnet durch**
- Steuerung des Betriebs des Schaltwandlers (100) basierend auf einem Dimmer-Signal (93), das einen Helligkeits-Wunsch eines Benutzers indiziert, und
- Bestimmen der Führungsgröße (509) basierend auf dem Dimmer-Signal (93), sodass ein mittlerer Stromfluss zum Leuchtmittel (130) in Abhängigkeit von einem gewünschten Dimmer-Niveau verändert wird,
Verändern des positiven Offsets (315) und/oder des negativen Offsets (316) in Abhängigkeit von der Führungsgröße (509) der Regelschleife (500),
wobei die Offsets (315, 316) auf Basis einer Nachschlage-Tabelle in Abhängigkeit von der Führungsgröße der Regelschleife (500) bestimmt werden.

## Claims

1. An operating device (90) for an illuminant (130), comprising:
- a DC-DC switch-mode converter (100) having at least one switch (111, 112, 211, 211, 212) and an energy store (102, 202), and
- a controller (92) that is configured to switch the at least one switch (111, 112, 211, 212) as a manipulated variable (502) of a control loop (500),
wherein a manipulated variable (505) of the control loop (500) is determined on the basis of a combination (311) of a minimum current flow (352) through the DC-DC switch-mode converter (100) and a maximum current flow (351) through the DC-DC switch-mode converter (100),
wherein a controller (501) of the control loop (500) determines a difference between a reference variable (509) and the manipulated variable (505) and by suitable variation of the manipulated variable (502) minimizes this difference,
wherein a first switching time (391) of the at least one switch is determined by a positive offset (315) relative to the combination (311) of the minimum current flow (352) and the maximum current flow (351),
wherein a second switching time (391) of the at least one switch is determined by a negative offset (316) relative to the combination (311) of the minimum current flow (352) and the maximum current flow (351),
**characterized in that**
the controller (92) is configured to control in closed-loop control the operation of the switch-mode converter (100) on the basis of a dimmer signal (93) indicating a brightness desired by a user,
the reference variable (509) is determined on the basis of the dimmer signal (93), so that an average current flow to the illuminant (130) is changed as a function of a desired dimmer level, and
in addition the positive offset (315) and/or the negative offset (316) is changed as a function of the reference variable (509) of the control loop (500),
wherein the offsets (315, 316) are determined on the basis of a look-up table as a function of the reference variable of the control loop (500).

2. The operating device (90) according to claim 1,
wherein the manipulated variable (505) is determined on the basis of an average value (311) of the minimum current flow (352) and the maximum current flow (351).

3. The operating device (90) according to claims 1 or 2,
wherein the positive offset (315) or the negative offset (316) is not changed as a manipulated variable (502) of the control loop (500).

4. The operating device (90) according to any one of the preceding claims,
wherein the reference variable (509) of the control loop (500) is changed as a function of a prespecified average current flow to the illuminant (130).

5. The operating device (90) according to any one of the preceding claims,
wherein the DC-DC switch-mode converter (100) comprises a first switch (111, 121) that controls the charging process of the energy store (102, 202),
wherein the DC-DC switch-mode converter (100) comprises a second switch (112, 122) that controls the discharge process of the energy store (102, 202),
wherein a first switching time (391) of the first switch is determined by a positive offset (315) relative to the combination (311) of the minimum current flow (352) and the maximum current flow (351),
wherein a second switching time (392) of the second switch (112, 122) is determined by a negative offset (316) relative to the combination (311) of the minimum current flow (352) and the maximum current flow (351).

6. The operating device (90) according to any one of the preceding claims,
wherein the DC-DC switch-mode converter (100) is a flyback converter with a transformer,
wherein the manipulated variable is determined as a function of a winding ratio of the transformer.

7. The operating device (90) according to any one of the preceding claims, further comprising:
- at least one measurement circuit (121, 122, 221.222) that is configured to measure the minimum current flow as a current flow through the at least one switch as a first measurement signal and to measure the maximum current flow as a current flow through the at least one switch as a second measurement signal,
- a combination element that is coupled to the at least one measurement circuit and that is configured to combine the first measurement signal with the second measurement signal.

8. A method comprising:
- obtaining a first measurement signal indicative of a maximum current flow (351) through a switch-mode converter (100),
- obtaining a second measurement signal indicative of a minimum current flow (352) through the switch-mode converter (100),
- combining the first measurement signal with the second measurement signal, and
- controlling the operation of at least one switch (111, 112, 211, 212) of the switch-mode converter (100) as a manipulated variable (502) of a control loop (500) on the basis of the combined first and second measurement signals as the manipulated variable (505) of the control loop (500),
- determining a difference between a reference variable (509) and the manipulated variable (505), and
- minimizing this difference by suitable variation of the manipulated variable (502),
- determining a first switching time (391) of the at least one switch by a positive offset (315) relative to the combination (311) of the minimum current flow (352) and the maximum current flow (351),
- determining a second switching time (391) of the at least one switch by a negative offset (316) relative to the combination (311) of the minimum current flow (352) and the maximum current flow (351), **characterized by**
- controlling the operation of the switch-mode converter (100) on the basis of a dimmer signal (93) indicating a brightness desired by a user, and
- determining the reference variable (509) on the basis of the dimmer signal (93), so that an average current flow to the illuminant (130) is changed as a function of a desired dimmer level,
changing the positive offset (315) and/or the negative offset (316) as a function of the reference variable (509) of the control loop (500),
wherein the offsets (315, 316) are determined on the basis of a look-up table as a function of the reference variable of the control loop (500).

## Revendications

1. Appareil de commande (90) pour une ampoule (130), qui comprend :
- un convertisseur à découpage CC-CC (100) comprenant au moins un commutateur (111, 112, 211, 212) et un accumulateur d'énergie (102, 202) et
- une unité de commande (92), qui est conçue pour connecter l'au moins un commutateur (111, 112, 211, 212) en tant que variable de réglage (502) d'une boucle de régulation (500),
dans lequel une variable de régulation (505) de la boucle de régulation (500) est déterminée sur la base d'une combinaison (311) d'un flux de courant minimal (352) à travers le convertisseur à découplage CC-CC (100) et d'un flux de courant maximal (351) à travers le convertisseur à découpage CC-CC (100),
dans lequel un régulateur (501) de la boucle de régulation (500) détermine un écart entre une variable de référence (509) et la variable de régulation (505) et, par une variation adaptée de la variable de réglage (502), réduit cet écart au minimum,
dans lequel un premier instant de commutation (391) de l'au moins un commutateur est déterminé par un décalage positif (315) par rapport à la combinaison (311) du flux de courant minimal (352) et du flux de courant maximal (351),
dans lequel un deuxième instant de commutation (391) de l'au moins un commutateur est déterminé par un décalage négatif (316) par rapport à la combinaison (311) du flux de courant minimal (352) et du flux de courant maximal (351),
**caractérisé en ce que**
l'unité de commande (92) est conçue pour commander de manière régulée le fonctionnement du convertisseur à découpage (100) sur la base d'un signal de variateur (93), qui indique un souhait de luminosité d'un utilisateur,
la variable de référence (509) est déterminée sur la base du signal de variateur (93), de sorte qu'un flux de courant moyen vers l'ampoule (130) soit modifié en fonction d'un niveau de variateur souhaité, et
en outre le décalage positif (315) et/ou le décalage négatif (316) soi(en)t modifié(s) en fonction de la variable de référence (509) de la boucle de régulation (500),
dans lequel les décalages (315, 316) sont déterminés sur la base d'une table de consultation en fonction de la variable de référence de la boucle de régulation (500).

2. Appareil de commande (90) selon la revendication 1,
dans lequel la variable de régulation (505) est déterminée sur la base d'une valeur médiane (311) du flux de courant minimal (352) et du flux de courant maximal (351).

3. Appareil de commande (90) selon la revendication 1 ou 2,
dans lequel le décalage positif (315) ou le décalage négatif (316) est/sont modifié(s) autrement que comme la variable de réglage (502) de la boucle de régulation (500).

4. Appareil de commande (90) selon l'une quelconque des revendications précédentes,
dans lequel la variable de référence (509) de la boucle de régulation (500) est modifiée en fonction d'un flux de courant moyen prédéfini vers l'ampoule (130).

5. Appareil de commande (90) selon l'une quelconque des revendications précédentes,
dans lequel le convertisseur à découpage CC-CC (100) présente un premier commutateur (111, 121), qui commande le processus de charge de l'accumulateur d'énergie (102, 202),
dans lequel le convertisseur à découpage CC-CC (100) présente un deuxième commutateur (112, 122), qui commande le processus de décharge de l'accumulateur d'énergie (102, 202),
dans lequel un premier instant de commutation (391) du premier commutateur est déterminé par un décalage positif (315) par rapport à la combinaison (311) du flux de courant minimal (352) et du flux de courant maximal (351),
dans lequel un deuxième instant de commutation (392) du deuxième commutateur (112, 122) est déterminé par un décalage négatif (316) par rapport à la combinaison (311) du flux de courant minimal (352) et du flux de courant maximal (351).

6. Appareil de commande (90) selon l'une quelconque des revendications précédentes,
dans lequel le commutateur à découpage CC-CC (100) est un convertisseur flyback avec un transformateur,
dans lequel la variable de réglage est déterminée en fonction d'un rapport d'enroulement du transformateur.

7. Appareil de commande (90) selon l'une quelconque des revendications précédentes, qui comprend en outre :
- au moins un circuit de mesure (121, 122, 221, 222), qui est conçu pour mesurer le flux de courant minimal sous forme de flux de courant traversant l'au moins un commutateur en tant que premier signal de mesure et pour mesurer le flux de courant maximal sous forme de flux de courant traversant l'au moins un commutateur en tant que deuxième signal de mesure,
- un élément de combinaison, qui est couplé à l'au moins un circuit de mesure et qui est conçu pour combiner le premier signal de mesure avec le deuxième signal de mesure.

8. Procédé, comprenant :
- l'obtention d'un premier signal de mesure, qui indique un flux de courant maximal (351) traversant un convertisseur à découpage (100),
- l'obtention d'un deuxième signal de mesure, qui indique un flux de courant minimal (352) traversant le convertisseur à découpage (100),
- la combinaison du premier signal de mesure avec le deuxième signal de mesure, et
- la commande du fonctionnement d'au moins un commutateur (111, 112, 211, 212) du convertisseur à découpage (100) en tant que variable de réglage (502) d'une boucle de régulation (500) sur la base des premier et deuxième signaux de mesure combinés sous forme de variable de régulation (505) de la boucle de régulation (500),
- détermination d'un écart entre une variable de référence (509) et la variable de régulation (505), et
- réduction au minimum de cet écart par une variation adaptée de la variable de réglage (502),
- détermination d'un premier instant de commutation (391) de l'au moins un commutateur par un décalage positif (315) par rapport à la combinaison (311) du flux de courant minimal (352) et du flux de courant maximal (351),
- détermination d'un deuxième instant de commutation (391) de l'au moins un commutateur par un décalage négatif (316) par rapport à la combinaison (311) du flux de courant minimal (352) et du flux de courant maximal (351), **caractérisé par**
- la commande du fonctionnement du convertisseur à découpage (100) sur la base d'un signal de variateur (93), qui indique un souhait de luminosité d'un utilisateur, et
- la détermination de la variable de référence (509) sur la base du signal de variateur (93), de sorte qu'un flux de courant moyen vers l'ampoule (130) soit modifié en fonction d'un niveau de variateur souhaité,
modification du décalage positif (315) et/ou du décalage négatif (316) en fonction de la variable de référence (509) de la boucle de régulation (500),
dans lequel les décalages (315, 316) sont déterminés sur la base d'une table de consultation en fonction de la variable de référence de la boucle de régulation (500).
